# FASCICULE DE BREVET EUROPEEN

(11) **EP 2 549 318 B1**
(45) Date de publication et mention de la délivrance du brevet: **07.03.2018**
(21) Numéro de dépôt: 12176044.1
(22) Date de dépôt: 12.07.2012
(51) Int. Cl.: G02B 6/44

(54) **Système multitubulaire pour câble**
Multirohrkabelsystem
Multitube system for a cable

(30) Priorité: 18.07.2011 FR 1156513
(43) Date de publication de la demande: 23.01.2013
(73) Titulaire: Wavin B.V., 8011 CW Zwolle (NL)
(72) Inventeur: Second, Christian, 74270 CHENE EN SEMINE (FR); Rouger, Jérôme, 03270 MARIOL (FR)
(74) Mandataire: Hoffmann Eitle

(56) Documents cités:
- EP-A1- 1 324 092
- EP-A2- 0 562 770
- WO-A1-2004/114489
- WO-A2-2009/042566
- FR-A1- 2 887 639
- US-A- 5 046 815
- US-A1- 2005 224 124
- GRIFFIOEN W ET AL: "Versatile optical access network for business and future consumer market", COMMUNICATION CABLES AND RELATED TECHNOLOGIES. EC. PROCEEDINGS OF THE EUROCABLE CONFERENCE, XX, XX, 21 juin 1999 (1999-06-21), pages 69-75, XP008006610,

## Description

La présente invention concerne un procédé de réalisation d'un système multi tubulaire pour câble, en particulier câble optique.

De nos jours, on utilise des câbles dans de nombreux domaines de l'industrie. En particulier, on utilise de plus en plus de câbles en fibres optiques dans des applications liées aux réseaux de télécommunications.

Généralement, ces câbles sont disposés dans des tubes de protection formant des gaines, réalisés dans des matériaux thermoplastiques tels que le polypropylène, un polyéthylène ou leurs mélanges, et qui permettent de protéger le câble durant son transport et son usage.

On connaît dans l'art antérieur des tubes contenant des câbles de manière lâche, de façon à pouvoir retirer et remplacer le câble. Pour obtenir un tel dispositif, on fabrique tout d'abord le tube que l'on enroule, puis on introduit le câble enroulé, par exemple par soufflage d'air. Le produit ainsi obtenu est appelé C-I-C (Cable in conduit en anglais, soit câble en conduit), c'est-à-dire un conduit qui comprend en son sein un câble. Ce produit est alors utilisé sur le terrain: une tranchée est creusée et le conduit contenant le câble est déposé dans la tranchée.

Les documents suivants font partie de l'art antérieur:
FR-A1-2 887 639,
W. Griffioen et al., "Versatile Optical Access Network for Business and Future Consumer Market",
EP-A2-0 562 770,
US-A1-2005/0224124,
EP-A1-1 324 092, et
US 5,046,815.

Le but de l'invention est de proposer un procédé de réalisation d'un système multitubulaire permettant en un seul dispositif de regrouper plusieurs tubes.

A cet effet, l'invention concerne un procédé selon la revendication 1.

L'invention permet ainsi de pouvoir utiliser directement un câble dans un tube, sans avoir besoin d'insuffler ledit câble après la réalisation du tube, ce qui permet de gagner du temps, tout en conservant la possibilité d'enlever et de remplacer le câble.

De plus, le système multitubulaire pré-câblé selon l'invention peut être d'une longueur beaucoup plus élevée que les systèmes déjà connus.

Le procédé selon l'invention est applicable à une grande variété de câbles, tels que les câbles à base de fibres optique, les câbles coaxiaux, les câbles d'éclairage, les câbles de puissance, mais également les conducteurs, les fils électriques, les lignes électriques ou les lignes de communication.

Selon un mode de réalisation de l'invention, ladite enveloppe est en contact en butée avec les au moins deux micro-tubes.

Selon un mode de réalisation de l'invention, les au moins deux micro-tubes sont en contact en butée l'un avec l'autre. En variante, les au moins deux micro-tubes sont séparés l'un de l'autre et ne sont pas en contact.

De préférence, chaque micro-tube contient de manière lâche (sans le serrer) au moins un câble. En particulier, chaque micro-tube contient de façon lâche un câble. Toutefois, en variante au moins un micro-tube comporte plusieurs câbles.

Selon un mode de réalisation de l'invention, un micro-tube comprend au moins deux couches.

Selon un exemple particulier, un micro-tube comprend une couche extérieure qui peut être en un matériau thermoplastique tel que du polypropylène, du polyéthylène ou un de leurs mélanges, et une couche intérieure de lubrification (ou qui présente au moins des propriétés lubrifiantes), ce qui permet de faciliter le passage du câble dans le micro-tube.

Ainsi, on peut prévoir que la paroi intérieure d'un micro-tube contenant le câble comporte un film ou un revêtement sous forme solide ou liquide.

Alternativement, on peut prévoir que la face interne du micro-tube soit annelée ou présente des rainures ou des nervures, toujours en vue de faciliter le passage du câble.

Ainsi, selon un mode de réalisation de l'invention, au moins un micro-tube présente une paroi intérieure ondulée.

De la même manière, selon un mode de réalisation de l'invention, ladite enveloppe comporte au moins deux couches.

Les matériaux utilisés dans l'invention pour la réalisation des micro-tubes et de l'enveloppe peuvent être choisis parmi de nombreux polymères, à condition que ceux-ci présentent la capacité à être enroulés (puisque c'est sous cette forme que les tubes, et le système multitubulaire selon l'invention sont généralement stockés).

En particulier, lesdits au moins deux micro-tubes comprennent un matériau choisi parmi un polyéthylène, un polypropylène et leurs mélanges.

De même, ladite enveloppe peut comprendre un matériau choisi parmi un polyéthylène, un polypropylène et leurs mélanges.

De préférence, le système multitubulaire présente une longueur comprise entre 250 mm et 4000 m, c'est-à-dire qu'il peut être utilisé dans des applications nécessitant des systèmes câbles en conduit de grande longueur.

Selon un mode de réalisation de l'invention, un micro-tube présente un diamètre intérieur compris entre 3 et 12 mm, de préférence d'environ 3 mm, et un diamètre extérieur compris entre 4 et 16 mm, de préférence d'environ 4 mm.

L'épaisseur du micro-tube est elle de préférence comprise entre 0,5 et 2 mm.

Toutefois, le système multitubulaire peut comprendre un micro-tube présentant des dimensions plus importantes : il est ainsi possible de prévoir que le micro-tube présente un diamètre intérieur d'environ 33 mm et un diamètre extérieur d'environ 40 mm.

Quant au câble, son diamètre extérieur dépendra du diamètre intérieur du micro-tube qui le contient.

Le micro-tube contenant de façon lâche au moins un câble peut être fabriqué directement, c'est-à-dire que le (ou les) câbles(s) est placé dans le micro-tube lorsque ce dernier est extrudé (le micro-tube étant extrudé autour du ou des câble(s)).

Le micro-tube contenant l'au moins un câble peut être extrudé en deux étapes. Par exemple, dans une première étape le micro-tube est extrudé de manière à présenter une épaisseur de 0,3 à 0,7 mm. Après refroidissement, une deuxième étape d'extrusion est alors effectuée, afin de renforcer davantage le micro-tube en extrudant une seconde couche présentant une épaisseur de 1 à 2,5 mm.

Grâce à ce procédé, il n'est pas nécessaire d'introduire l'au moins un câble dans le micro-tube déjà réalisé, opération qui peut s'avérer délicate, et l'on obtient directement un micro-tube contenant de façon lâche au moins un câble.

Un procédé permettant d'obtenir le système multitubulaire comprend les étapes suivantes consistant à :
- se procurer au moins deux bobines, chaque bobine supportant un micro-tube, au moins un micro-tube contenant de façon lâche un câble,
- alimenter au moins deux micro-tubes vers une extrudeuse,
- extruder un matériau thermoplastique à travers une tête d'extrusion et former une enveloppe autour d'au moins deux micro-tubes,
- entraîner l'enveloppe formée et les micro-tubes qu'elle contient hors de l'extrudeuse (une bobineuse les tirant vers une extrémité et l'extrudeuse les poussant vers la même extrémité),
- refroidir l'enveloppe et les micro-tubes, et
- enrouler l'enveloppe contenant les micro-tubes sur une bobine.

Ce procédé pourrait bien entendu être adapté selon le système multitubulaire que l'on souhaite obtenir. En particulier, chaque bobine pourra supporter un micro tube qui contiendra de manière lâche au moins un câble ou chaque bobine pourra supporter un micro tube qui contiendra de manière lâche un câble.

L'invention va maintenant être décrite plus en détail à l'aide des figures annexées dans lesquelles :
- les figures 1a, 1b et 1c représentent différentes variantes d'enveloppes du système multitubulaire et
- les figures 2a à 2e représentent différentes variantes du système multitubulaire

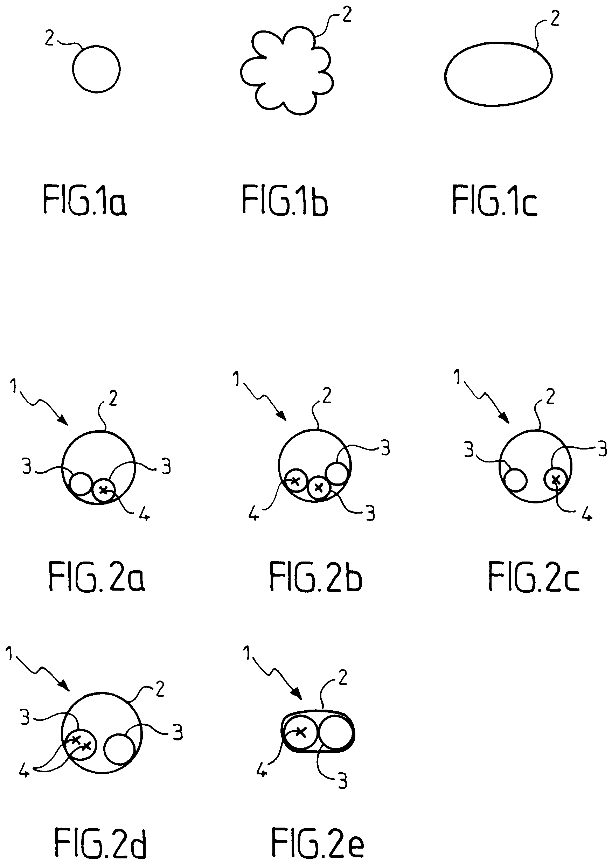

Comme illustré aux figures 1a, 1b, 1c, l'enveloppe 2 utilisée pour contenir les micro-tubes 3 peut présenter des formes très différentes, par exemple circulaire, ovoïde, ou toute forme adaptée.

Le système multitubulaire 1 présente, au sein de l'enveloppe extérieure 2, au moins deux micro-tubes 3, lesquels contiennent au total au moins un câble 4, ce qui permet plusieurs variantes dont certaines sont présentées aux figures 2a à 2e.

On peut notamment y voir qu'il est possible qu'un micro-tube 3 ne contienne aucun câble 4, ou qu'un mcro-tube 3 contienne plusieurs câbles 4 (figure 2d).

De même, l'enveloppe 2 peut contenir les micro-tubes 3 de façon serrée (figure 2e) ou de façon lâche (figure 2a à 2d), du moment que chacun des micro-tubes 3 et l'enveloppe 2 soient en contact.

Les micro-tubes 3 peuvent eux être séparés (figures 2c et 2d) ou en contact (figure 2a, 2b, 2e).

## Revendications

1. Procédé de réalisation d'un système multitubulaire pour câble, en particulier câble à base de fibres optiques, comportant au moins deux micro-tubes, **caractérisé en ce qu'**il comporte les étapes suivantes:
- se procurer au moins deux bobines, chaque bobine supportant un micro-tube, au moins un micro-tube contenant de façon lâche un câble réalisé au préalable par extrusion dudit micro-tube autour du câble,
- alimenter au moins deux micro-tubes vers une extrudeuse,
- extruder un matériau thermoplastique à travers une tête d'extrusion et former une enveloppe autour d'au moins deux micro-tubes,
- entraîner l'enveloppe formée et les micro-tubes qu'elle contient hors de l'extrudeuse,
- refroidir l'enveloppe et les micro-tubes, et
- enrouler l'enveloppe contenant les micro-tubes sur une bobine.

2. Procédé selon la revendication 1, **caractérisée en ce que** pour réaliser le micro-tube contenant l'au moins un câble, il comporte une première étape d'extrusion de manière à présenter une épaisseur de 0,3 à 0,7 mm puis, après refroidissement, une deuxième étape d'extrusion afin de renforcer davantage le micro-tube en extrudant une seconde couche présentant une épaisseur supplémentaire de 1 à 2,5 mm.

3. Procédé selon l'une quelconque des revendications précédentes, **caractérisé en ce que** ladite enveloppe est en contact en butée avec les au moins deux micro-tubes.

4. Procédé selon l'une quelconque des revendications précédentes, **caractérisé en ce que** les au moins deux micro-tubes sont en contact en butée l'un avec l'autre.

5. Procédé selon l'une quelconque des revendications précédentes, **caractérisé en ce que** chaque micro-tube contient de façon lâche un câble.

6. Procédé selon l'une quelconque des revendications précédentes, **caractérisé en ce que** lesdits au moins deux micro-tubes sont réalisés dans un matériau choisi parmi un polyéthylène, un polypropylène et leurs mélanges.

7. Procédé selon l'une quelconque des revendications précédentes, **caractérisé en ce que** ladite enveloppe est réalisée en un matériau choisi parmi un polyéthylène, un polypropylène et leurs mélanges.

8. Procédé selon l'une quelconque des revendications précédentes, **caractérisé en ce qu'**au moins un micro-tube est extrudé de façon à présenter une paroi intérieure ondulée.

9. Procédé selon l'une quelconque des revendications 1 à 7, **caractérisé en ce qu'**au moins un micro-tube est extrudé de façon à comporter sur sa paroi intérieure un film ou un revêtement sous forme solide ou liquide.

10. Procédé selon l'une quelconque des revendications précédentes, **caractérisé en ce que** ladite enveloppe comporte au moins deux couches.

## Patentansprüche

1. Verfahren zur Herstellung eines Multirohrsystems für Kabel, insbesondere Kabel auf Basis von Lichtwellenleitern, das mindestens zwei Mikrorohre umfasst, **dadurch gekennzeichnet, dass** es folgende Schritte umfasst:
- Beschaffen von mindestens zwei Spulen, wobei jede einzelne Spule ein Mikrorohr trägt und mindestens ein Mikrorohr ein Kabel in loser Art enthält, das vorher durch Extrusion des Mikrorohrs rund um das Kabel hergestellt wurde,
- Zuführen von mindestens zwei Mikrorohren in einen Extruder,
- Extrudieren eines thermoplastischen Materials durch einen Extrusionskopf und Formen einer Hülle um mindestens zwei Mikrorohre,
- Ziehen der geformten Hülle und der Mikrorohre, die sie enthält, aus dem Extruder,
- Abkühlen der Hülle und der Mikrorohre, und
- Aufrollen der Hülle, die die Mikrorohre enthält, auf eine Spule.

2. Verfahren nach Anspruch 1, **dadurch gekennzeichnet, dass** es zur Herstellung des Mikrorohrs, das mindestens ein Kabel enthält, einen ersten Extrusionsschritt umfasst, um eine Stärke von 0,3 bis 0,7 mm darzustellen und nach Abkühlung einen zweiten Extrusionsschritt, damit das Mikrorohr durch Extrudieren einer zweiten Schicht weiter verstärkt wird, die eine zusätzliche Stärke von 1 bis 2,5 mm darstellt.

3. Verfahren nach einem der vorstehenden Ansprüche, **dadurch gekennzeichnet, dass** die Hülle auf Anschlag in Kontakt mit den mindestens zwei Mikrorohren ist.

4. Verfahren nach einem der vorstehenden Ansprüche, **dadurch gekennzeichnet, dass** die mindestens zwei Mikrorohre auf Anschlag miteinander in Kontakt sind.

5. Verfahren nach einem der vorstehenden Ansprüche, **dadurch gekennzeichnet, dass** jedes Mikrorohr ein Kabel in loser Art enthält.

6. Verfahren nach einem der vorstehenden Ansprüche, **dadurch gekennzeichnet, dass** die mindestens zwei Mikrorohre aus einem Material hergestellt sind, das aus Polyethylen, Polypropylen oder ihren Mischungen ausgewählt ist.

7. Verfahren nach einem der vorstehenden Ansprüche, **dadurch gekennzeichnet, dass** die Hülle aus einem Material hergestellt ist, das aus Polyethylen, Polypropylen oder ihren Mischungen ausgewählt ist.

8. Verfahren nach einem der vorstehenden Ansprüche, **dadurch gekennzeichnet, dass** mindestens ein Mikrorohr so extrudiert wird, dass es eine gewellte Innenwand darstellt.

9. Verfahren nach einem der Ansprüche 1 bis 7, **dadurch gekennzeichnet, dass** mindestens ein Mikrorohr so extrudiert wird, dass es an seiner Innenwand eine Folie oder eine Beschichtung in fester oder flüssiger Form umfasst.

10. Verfahren nach einem der vorstehenden Ansprüche, **dadurch gekennzeichnet, dass** die Hülle mindestens zwei Schichten umfasst.

## Claims

1. Method for producing a multitube system for a cable, in particular a cable based on optical fibres, comprising at least two microtubes, **characterised in that** it comprises the following steps:
- procuring at least two coils, each coil supporting a microtube, at least one microtube loosely containing a cable previously produced by extrusion of said microtube around the cable,
- feeding at least two microtubes to an extruder,
- extruding a thermoplastic material through an extrusion head and forming a casing around at least two microtubes,
- driving the casing formed and the microtubes that it contains out of the extruder,
- cooling the casing and the microtubes, and
- winding the casing containing the microtubes on a coil.

2. Method according to claim 1, **characterised in that**, in order to produce the microtube containing the at least one cable, it comprises a first extrusion step so as to have a thickness of 0.3 to 0.7 mm and then, after cooling, a second extrusion step in order to further strengthen the microtube by extruding a second layer having an additional thickness of 1 to 2.5 mm.

3. Method according to any of the preceding claims, **characterised in that** said casing is in abutment contact with the at least two microtubes.

4. Method according to any of the preceding claims, **characterised in that** the at least two microtubes are in abutment contact with each other.

5. Method according to any of the preceding claims, **characterised in that** each microtube loosely contains a cable.

6. Method according to any of the preceding claims, **characterised in that** said at least two microtubes are produced from a material chosen from a polyethylene, a polypropylene and mixtures thereof.

7. Method according to any of the preceding claims, **characterised in that** said casing is produced from a material chosen from a polyethylene, a polypropylene and mixtures thereof.

8. Method according to any of the preceding claims, **characterised in that** at least one microtube is extruded so as to have an undulating internal wall.

9. Method according to any of claims 1 to 7, **characterised in that** at least one microtube is extruded so as to comprise on its internal wall a film or a coating in solid or liquid form.

10. Method according to any of the preceding claims, **characterised in that** said casing comprises at least two layers.
